# EUROPÄISCHE PATENTSCHRIFT

(11) **EP 1 688 654 B1**
(45) Veröffentlichungstag und Bekanntmachung des Hinweises auf die Patenterteilung: **23.01.2008**
(21) Anmeldenummer: 06000771.3
(22) Anmeldetag: 14.01.2006
(51) Int. Cl.: F16K 51/02, F16K 1/36

(54) **Vakuumventil**
Vacuum valve
Clapet à vide

(30) Priorität: 02.02.2005 DE 102005004987
(43) Veröffentlichungstag der Anmeldung: 09.08.2006
(73) Patentinhaber: VAT Holding AG, 9469 Haag (CH)
(72) Erfinder: Mayer, Thomas, 6845 Hohenems (AT); Duelli, Bernhard, 6830 Übersaxen (AT)
(74) Vertreter: Hofmann, Ralf U.

(56) Entgegenhaltungen:
- AT-B- 396 285
- DE-A1- 2 623 906
- DE-A1- 4 446 947
- US-A- 5 318 274

## Beschreibung

Die Erfindung betrifft ein Vakuumventil mit einer an einem Ventilkörper angeordneten konischen Dichtfläche, die eine Ventilöffnung umgibt, einem Ventilteller, der rotationssymmetrisch bezüglich seiner zentralen Achse ausgebildet ist und an dem eine konische Dichtfläche angeordnet ist und der zwischen einer Offenstellung im geöffneten Zustand des Vakuumventils und einer Schließstellung im abgedichteten Zustand des Vakuumventils verstellbar ist, wobei die Bewegung des Ventiltellers beim Schließen des Vakuumventils zumindest in einem letzten Abschnitt vor Erreichen der Schließstellung in eine Schließrichtung erfolgt, die parallel zur zentralen Achse des Ventiltellers liegt, und einem Dichtring, der erste und zweite Dichtflächen aufweist, die in der Schließstellung des Ventiltellers einerseits an die Dichtfläche des Ventilkörpers und andererseits an die Dichtfläche des Ventiltellers angepresst sind, wobei der Ventilteller, der Ventilkörper und der Dichtring zumindest in den Bereichen der Dichtflächen aus Metall bestehen.

Ein derartiges Vakuumventil, das in Form eines Ganzmetallventils ausgebildet ist, ist aus der US 4,458,905 bekannt. Es handelt sich um eine bewährte Konstruktion, die insbesondere für Hochvakuumanwendungen eingesetzt wird. Nachteilig an diesem Vakuumventil ist es aber, dass die aufzuwendende Kraft zum dichtenden Schließen des Ventils (= Schließkraft) relativ groß ist.

Ein weiteres Vakuumventil dieser Art ist aus der DE 44 46 947 C2 bekannt. Um die erforderliche Schließkraft zu verringern, ist der Dichtring bei diesem Vakuumventil mit einer im Bereich zwischen den beiden Dichtflächen liegenden Einschnürung ausgebildet, die durch eine V-förmige Ausbildung (mit einem Öffnungswinkel größer als 90°) der beiden die Dichtflächen verbindenden Seitenflächen gebildet wird. Die erforderliche Schließkraft kann auf diese Weise zwar verringert werden, ist allerdings immer noch relativ hoch.

Aus der DE 26 23 906 A1 ist ein Vakuumventil bekannt, bei dem der Ventilteller mit einer nach außen abstehenden, ringförmigen Scheibe versehen ist. Die außen umlaufende Schmalseite der Scheibe ist abgerundet und bildet eine Dichtfläche. Die Scheibe ist nach Art einer Tellerfeder elastisch ausgebildet und verläuft (bezogen auf die Schließrichtung) schräg nach vorne, d. h. sie schließt im Längsschnitt gesehen mit der Schließrichtung des Ventiltellers einen Winkel von weniger als 90° ein. Die äußere Dichtfläche dieser Scheibe wirkt mit einer konischen Dichtfläche am Ventilkörper zusammen. Nachteilig an diesem Ventil ist es, dass bereits sehr geringe Toleranzen der Geometrie der Scheibe und der Dichtfläche des Ventilkörpers, beispielsweise Rundheitsfehler, zu einer mangelnden Dichtheit des Ventils führen können. Auch kann es zu Schnappeffekten des Ventils beim Öffnen kommen, insbesondere wenn das Ventil ausgeheizt worden ist. Dieses Vakuumventil hat sich daher in der Praxis nicht bewährt.

Aus der AT 396 285 B ist weiters ein Vakuumventil bekannt, bei welchem ein nach Art eines Spreizkonus ausgebildetes Betätigungsorgan mit einem schalenartigen Verschlussglied zusammenwirkt. Hierzu ist mit dem schalenartigen Verschlussglied eine Ringscheibe einstückig ausgebildet. Die tellerfederartig ausgebildete Ringscheibe bildet beim Einfahren des Betätigungsorgans ein Spreizglied, welches das schalenartige Verschlussglied nach außen drückt, sodass ein äußerer Dichtrand des schalenartigen Verschlussgliedes an eine konische Dichtfläche des Ventilkörpers angepresst wird, um das Vakuumventil abzudichten. Dieses Vakuumventil benötigt eine relativ hohe Kraft zum dichtenden Schließen. Weiters führen bei diesem Vakuumventil ebenfalls relativ kleine geometrische Ungenauigkeiten zu einer mangelnden Dichtheit des Ventils.

Aufgabe der Erfindung ist es, ein verbessertes Vakuumventil der eingangs genannten Art bereitzustellen. Erfindungsgemäß gelingt dies durch ein Vakuumventil mit den Merkmalen des Patentanspruchs 1.

Es hat sich gezeigt, dass durch die erfindungsgemäße Ausbildung des Ventiltellers die zum dichtenden Schließen des Vakuumventils benötigte Kraft im Vergleich zu einem herkömmlichen starren und ebenen Ventilteller, wie er beispielsweise aus der US 4,458,905 B oder DE 44 46 947 C2 bekannt ist, verringert werden kann. In einer Realisierung der Erfindung konnte eine Verringerung der benötigten Schließkraft auf die Hälfte erreicht werden.

Die Verringerung der erforderlichen Schließkraft, um das Vakuumventil abzudichten, wird insbesondere auf eine radial nach außen wirkende Kraftkomponente des Ventiltellers in seiner Schließstellung zurückgeführt.

Auch kann durch die Ausbildung des Ventiltellers mit einer erfindungsgemäßen Elastizität bei Abweichungen der Rundheit der Dichtfläche des Ventiltellers oder der Dichtfläche des Ventilkörpers oder der Dichtflächen des Dichtrings eine gleichmäßigere Kraftverteilung erreicht werden.

Um einen günstigen Elastizitätsverlauf des Ventiltellers zu erreichen, ist es bevorzugt, dass die Dicke des Ventiltellers sich zum radial außenliegenden Rand des Ventiltellers hin verringert.

In einer möglichen Ausführungsform ist der Ventilteller im achsialen Mittelschnitt gesehen durchgehend gekrümmt ausgebildet. Es liegt also ein insgesamt gewölbter bzw. konvexkonkaver Ventilteller vor. In anderen Ausführungsformen der Erfindung kann der Ventilteller V-förmig ausgebildet sein (mit einem Öffnungswinkel größer als 90°) oder mindestens zwei in radialer Richtung aneinander anschließende Abschnitte aufweist, die über eine Abkrümmung oder Abwinklung miteinander verbunden sind.

Ein erfindungsgemäßes Vakuumventil kann beispielsweise in Form eines Eckventils ausgebildet sein. Die gesamte Schließbewegung des Ventiltellers erfolgt hier in die Schließrichtung parallel zur zentralen Achse des Ventiltellers. Auch kann ein erfindungsgemäßes Vakuumventil in Form

eines Schieberventils ausgebildet sein, bei welchem die Schließbewegung des Ventiltellers ausgehend von der Offenstellung des Ventiltellers zunächst senkrecht zur zentralen Achse des Ventiltellers erfolgt. Der letzte Abschnitt der Schließbewegung, der in Schließrichtung parallel zur zentralen Achse des Ventiltellers erfolgt, kann beispielsweise über einen Spreizmechanismus bewirkt werden. Derartige Schieberventile sind beispielsweise aus der US 4,560,141 B, US 4,052,036 B und US 4,470,576 B bekannt. Auch andere Arten von Verstelleinrichtungen für den Ventilteller, um eine Bewegung des Ventiltellers zu erreichen, die zumindest im letzten Teil vor Erreichen der Schließstellung des Ventiltellers in Richtung parallel zur zentralen Achse des Ventiltellers erfolgt, sind bekannt.

Ein erfindungsgemäßes Vakuumventil kann in unterschiedlichen Geometrien und mit unterschiedlichen Stelleinrichtungen ausgebildet sein, wenn beim Schließen des Ventils zumindest im letzten Abschnitt der Schließbewegung eine Schließrichtung parallel zur zentralen Achse des Ventiltellers, um welche dieser rotationssymmetrisch ausgebildet ist, vorliegt.

Weitere Vorteile und Einzelheiten der Erfindung werden im Folgenden anhand der beiliegenden Zeichnung erläutert. In dieser zeigen:
- Fig. 1: eine Seitenansicht eines in Form eines Eckventils ausgebildeten Vakuumventils gemäß der Erfindung;
- Fig. 2: eine Ansicht des Ventils von Fig. 1 (Blickrichtung A in Fig. 1);
- Fig. 3: einen Schnitt entlang der Linie B-B von Fig. 2, im geschlossenen, abgedichteten Zustand des Ventils;
- Fig. 4: einen Schnitt entsprechend Fig. 3, aber im geöffneten Zustand des Ventils;
- Fig. 5: einen vergrößerten Ausschnitt von Fig. 4, im Bereich des Ventiltellers;
- Fig. 6: einen weiter vergrößerten Ausschnitt von Fig. 5 im Bereich des Dichtrings (Detail X von Fig. 3);
- Fig. 7: einen Schnitt durch ein Ventil gemäß einer weiteren Ausführungsform der Erfindung (Schnittlinie C-C von Fig. 9), im geschlossenen Zustand des Ventils;
- Fig. 8: einen Schnitt entsprechend Fig. 7, im geöffneten Zustand des Ventils;
- Fig. 9: einen Schnitt entlang der Linie D-D von Fig. 7;
- Fig. 10: ein vergrößertes Detail Y von Fig. 7;
- Fig. 11: einen Schnitt durch ein weiteres Ausführungsbeispiel gemäß der Erfindung (Schnittlinie E-E von Fig. 13), im geschlossenen Zustand des Ventils;
- Fig. 12: einen Schnitt entsprechend Fig. 11 im geöffneten Zustand des Ventils;
- Fig. 13: einen Schnitt entlang der Linie F-F von Fig. 11;
- Fig. 14: bis Fig. 16 schematische Darstellungen von weiteren Ausführungsformen von Ventiltellern von erfindungsgemäßen Ventilen (jeweils im achsialen Mittelschnitt).

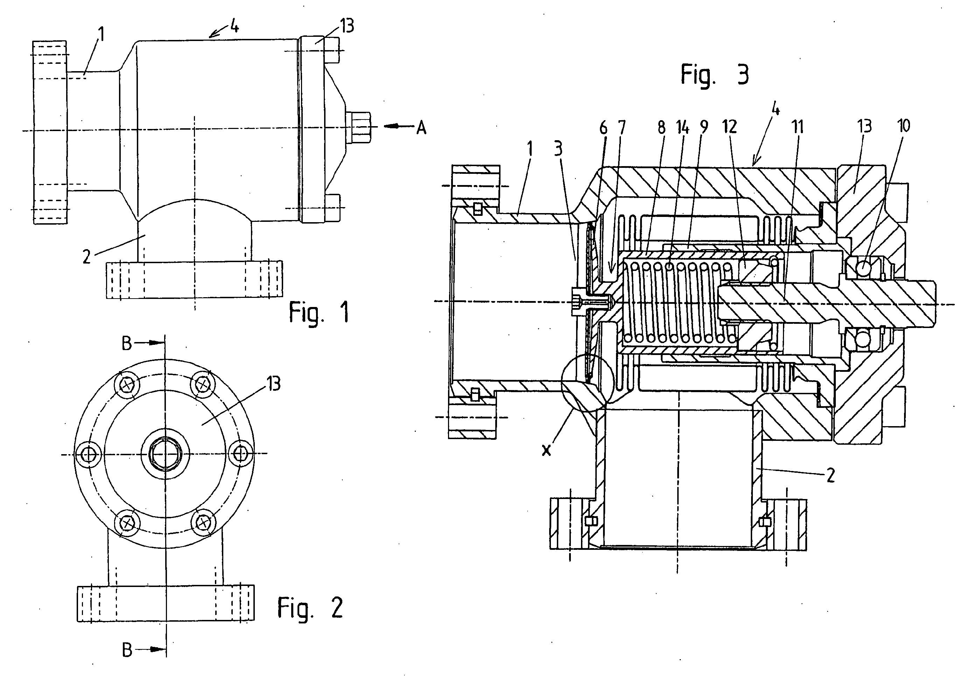

Bei der in den Fig. 1 bis 6 dargestellten Ausführungsform der Erfindung ist das Vakuumventil in Form eines Eckventils ausgebildet, bei dem die Anschlussstutzen 1, 2 winkelig, vorzugsweise rechtwinklig, zueinander stehen. Die Ventilöffnung 3 wird von einer am Ventilkörper 4 angeordneten Dichtfläche 5 umgeben. Der Ventilkörper 4 bildet insgesamt das Gehäuse des Vakuumventils.

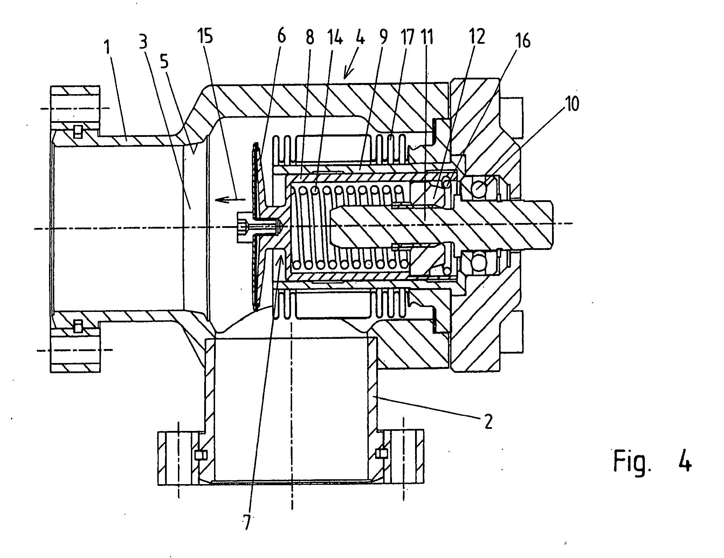

Ein Ventilteller 6 ist zwischen einer Offenstellung (Fig. 4) und einer Schließstellung (Fig. 3, 5 und 6) im abgedichteten Zustand des Vakuumventils verstellbar. Hierzu ist der Ventilteller 6 im Bereich seiner zentralen Achse an einem Tragteil 7 angebracht. Dieses ist in diesem Ausführungsbeispiel mit einem erweiterten, topfartigen Abschnitt 8 verbunden. Der topfartige Abschnitt 8 ist in einer Führungshülse 9 achsial verschiebbar geführt. Zur achsialen Verschiebung dient eine über ein Kugellager 10 drehbar gelagerte Spindel 11, auf der eine Spindelmutter 12 angeordnet ist. Die Spindelmutter 12 liegt innerhalb des topfartigen Abschnitts 8 und ist gegenüber diesem verdrehgesichert. Der topfartige Abschnitt 8 ist gegenüber der Führungshülse 9 ebenfalls verdrehgesichert.

Die Spindel 11 tritt durch den Gehäusedeckel 13 aus dem Gehäuse des Vakuumventils aus. Zwischen der Spindelmutter 12 und dem Boden des topfartigen Abschnitts 8 ist eine in Form einer Schraubenfeder ausgebildete Druckfeder 14 angeordnet.

Zum Schließen des Vakuumventils ausgehend von seinem geöffneten Zustand (Fig. 4) wird die Spindel 11 gedreht (z. B. mit einem Gabelschlüssel oder einem Drehmomentschlüssel), wodurch sich die Spindelmutter 12 auf der Spindel 11 in Richtung zum freien Ende der Spindel 11 verschiebt. Diese Verschiebung wird über die Druckfeder 14 auf den topfartigen Abschnitt 8 übertragen, der sich somit zusammen mit dem Ventilteller 6 in die Schließrichtung 15 bewegt, bis die Schließstellung des Ventiltellers 6 erreicht ist (Fig. 3) und das Vakuumventil abgedichtet ist. Zum Öffnen des Vakuumventils wird das Handrad 13 in die entgegengesetzte Richtung gedreht, wobei die Spindelmutter 12 an einen Anschlag des topfartigen Abschnitts 8 anfährt, der hier von einem Federring 16 gebildet wird und den topfartigen Abschnitt 8 in der Folge zusammen mit dem Ventilteller 6 entgegen der Schließrichtung 15 zurückzieht.

Diese Antriebsmechanik für ein Eckventil ist bekannt. Die Antriebsmechanik zur Verstellung des Ventiltellers 6 zwischen seiner Offenstellung und seiner Schließstellung könnte auch in anderer Weise ausgebildet sein. Bei einem Eckventil erfolgt die Bewegung des Ventiltellers zwischen der Offenstellung und Schließstellung üblicherweise gradlinig in bzw. entgegen der Schließrichtung.

Der Ventilteller 6 könnte prinzipiell mit dem Tragteil 7 einstückig ausgebildet sein, wie dies schematisch in den Fig. 3 bis 5 dargestellt ist. Andererseits könnten der Ventilteller 6 und das Tragteil 7 separate, miteinander verbundene Teile sein. Das Tragteil 7 und der topfartige Abschnitt 8 können wie in den Fig. 3 bis 5 schematisch dargestellt einstückig ausgebildet sein oder separate, miteinander verbundene Teile (beispielsweise über eine Schraubverbindung) sein.

Zur Abdichtung der Schließmechanik des Ventils dient ein nur schematisch eingezeichneter Faltenbalg bzw. Wellenbalg 17, wie dies ebenfalls bekannt und üblich ist.

Die am Ventilkörper 4 angeordnete Dichtfläche 5 ist konisch ausgebildet, wobei ihr Durchmesser sich in Schließrichtung 15 verringert.

An der radial außenliegenden Schmalseite des Ventiltellers 6 ist eine weitere konische Dichtfläche 18 angeordnet, deren Durchmesser sich ebenfalls in Schließrichtung 15 verringert.

Die Konizitätswinkel der Dichtflächen 5, 18 können beispielsweise im Bereich von 10° (+/- 5°) liegen.

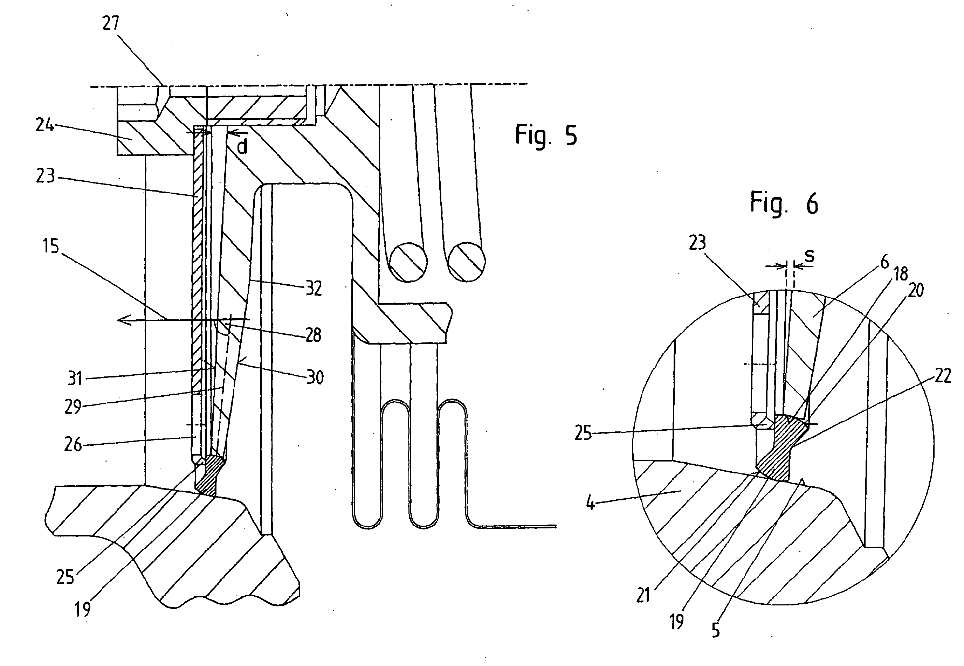

Zur Abdichtung des Vakuumventils ist weiters ein Dichtring 19 vorgesehen, der erste und zweite Dichtflächen 20, 21 besitzt. Diese Dichtflächen 20, 21 verlaufen im Querschnitt des Dichtrings gesehen kreisbogenförmig, wie dies am besten aus Fig. 6 ersichtlich ist.

Im abgedichteten Zustand des Vakuumventils, wenn sich der Ventilteller 6 in seiner Schließstellung befindet, ist die erste Dichtfläche 20 an die Dichtfläche 5 des Ventilkörpers 4 angepresst und die zweite Dichtfläche 21 ist an die Dichtfläche 18 des Ventiltellers 6 angepresst.

Der Dichtring 19 weist vorzugsweise im Bereich zwischen den beiden Dichtflächen 20, 21 eine Einschnürung 22 auf, die durch eine V-förmige Ausbildung der beiden die Dichtflächen 20, 21 verbindenden Seitenflächen des Dichtrings 19 ausgebildet wird (wobei der Öffnungswinkel dieser V-förmigen Ausbildungen größer als 90°, vorzugsweise größer als 120° ist). Es wird durch diese verringerte Dicke des Dichtrings im Bereich zwischen den beiden Dichtflächen 20, 21 die Elastizität des Dichtrings erhöht. Dies führt dazu, dass eine geringere Schließkraft erforderlich ist, um das Vakuumventil abzudichten.

Die Radien der ersten und zweiten Dichtfläche 20, 21 können beispielsweise im Bereich zwischen 0,5mm und 2mm liegen. Der Dichtring 19 kann insbesondere durch Abfräsung eines Runddrahtes, der einen geeigneten Durchmesser aufweist, beispielsweise 2mm, ausgebildet werden.

Die konische Ausbildung der Dichtflächen 5, 18 und die Ausbildung des Dichtrings 19 sind ebenfalls bereits bekannt, beispielsweise aus der eingangs genannten DE 44 46 947 C2.

Der Dichtring 19 ist im gezeigten Ausführungsbeispiel am Ventilteller 6 gehalten, d. h. beim Verstellen des Ventiltellers 6 in seine Offenstellung bewegt sich der Dichtring 19 mit dem Ventilteller mit. Hierzu ist im gezeigten Ausführungsbeispiel eine Halteplatte 23 an der vom Tragteil 7 abgewandten Vorderseite des Ventiltellers 6 befestigt, und zwar mittels eines Schraubbolzens 24, der eine zentrale Bohrung in der Halteplatte 23 durchsetzt und in eine Gewindebohrung eingeschraubt ist. Diese erstreckt sich zentral durch den Ventilteller 6 und reicht bis in das Tragteil 7.

Die Halteplatte 23 besitzt einen in Richtung zum Dichtring 19 abgewinkelten Randsteg 25, dessen Stirnseite am Dichtring 19 anliegt. In der Halteplatte 23 sind weiters Entlüftungsbohrungen 26 angeordnet.

Prinzipiell wäre es auch denkbar und möglich, obwohl weniger bevorzugt, eine Halterung für den Dichtring 19 vorzusehen, welche diesen an der Dichtfläche 5 des Ventilkörpers 4 hält. Beim Verfahren des Ventiltellers 6 in seine Offenstellung bleibt der Dichtring 19 dann in Anlage an der Dichtfläche 5 des Ventilkörpers 4. Solche Halterungen sind beispielsweise in der eingangs genannten US 4,458,905 gezeigt.

Der Ventilteller 6 ist in Bezug auf seine zentrale Achse 27 rotationssymmetrisch ausgebildet. Im achsialen Mittelschnitt (Fig. 3 bis 6) gesehen ist der Ventilteller 6 gekrümmt oder abgewinkelt ausgebildet. Hierbei schließt er zumindest in einem achsial außenliegenden Bereich mit der Schließrichtung 15 einen Winkel 28 ein, der weniger als 90° beträgt (Fig. 5). Die vertiefte Seite des Ventiltellers 6 liegt somit in Schließrichtung 15 gesehen vorne. Dieser Winkel 28 wird auf die Mittellinie 29 des Ventiltellers 6 bezogen, die im achsialen Mittelschnitt gesehen im gleichen Abstand von den beiden Seitenflächen 30, 31 des Ventiltellers 6 verläuft. Im der Dichtfläche 18 benachbarten Bereich des Ventiltellers 6 liegt dieser Winkel 28 vorzugsweise im Bereich von 70° bis 87°. Ein Bereich von 75° bis 85° ist besonders bevorzugt. Diese Winkelangaben beziehen sich auf den unbelasteten Zustand des Ventiltellers 6. In der Schließstellung des Ventiltellers 6, in welcher auf den Ventilteller 6 die Schließkraft wirkt, kommt es aufgrund der Elastizität des Ventiltellers 6, die weiter unten genauer erläutert wird, zu einer geringen Veränderung des Winkels 28, wobei dieser Winkel 28 in der Schließstellung des Ventiltellers 6 höchstens 90° beträgt, vorzugsweise nach wie vor weniger als 90° beträgt.

Im in den Fig. 1 bis 6 dargestellten Ausführungsbeispiel ist der Ventilteller in der Weise abgewinkelt ausgebildet, dass seine vom Tragteil 7 abgelegene Seitenfläche im achsialen Mittelschnitt gesehen V-förmig ausgebildet ist und die auf der Seite des Tragteils 7 liegende Seitenfläche ebenfalls V-förmig ausgebildet ist, wobei sie zwei durch eine Abkantung 32 getrennte Abschnitte mit unterschiedlichen Öffnungswinkeln besitzt.

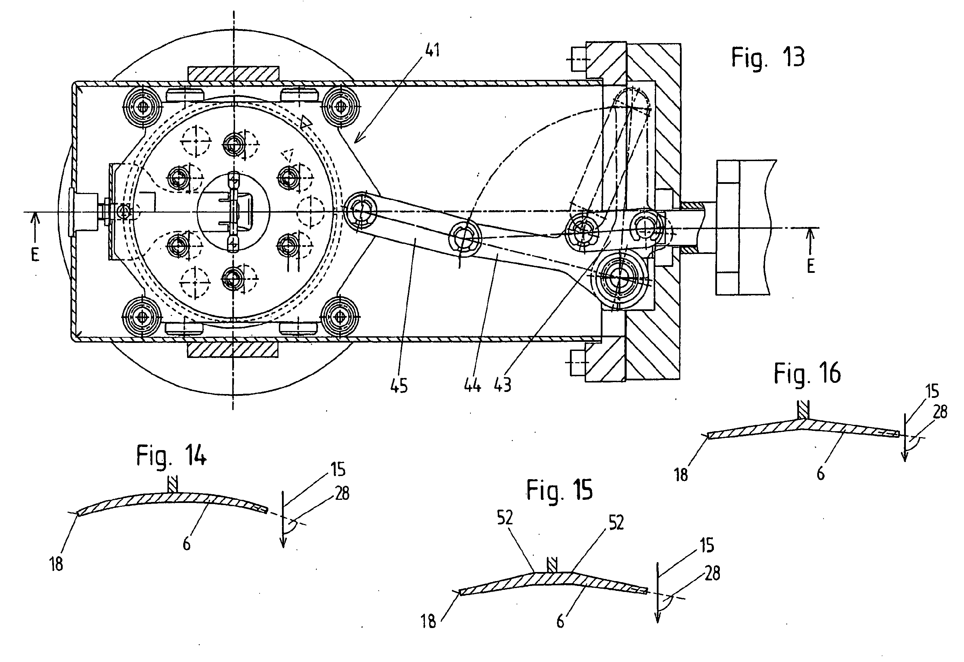

Auch andere abgewinkelte Ausbildungen des Ventiltellers 6 sind denkbar und möglich, wie dies weiter unten anhand der Fig. 14 bis 16 noch beispielhaft beschrieben wird. Ebenso wäre eine gekrümmte Ausbildung von einer oder beiden Seitenflächen 30, 31 denkbar und möglich. Wenn beide Seitenflächen gekrümmt sind, ist der Ventilteller 6 insgesamt gewölbt (konkavkonvex), wobei die konkav vertiefte Seite wiederum in Schließrichtung gesehen vorne liegt.

Der Ventilteller 6 ist weiters mit einer gewissen Elastizität ausgebildet. Es findet dadurch aufgrund der auf den Ventilteller im geschlossenen, abgedichteten Zustand des Vakuumventils einwirkenden Schließkraft eine elastische Verformung des Ventiltellers statt. Diese elastische Verformung ist so groß, dass der radial außenliegende Rand 33 des Ventiltellers sich in der Schließstellung des Ventiltellers 6 gegenüber der Offenstellung um eine Strecke s in Bezug auf einen Punkt im Zentrum des Ventiltellers 6 (d. h. im Bereich seiner zentralen Achse) in Richtung der zentralen Achse des Ventiltellers verschiebt, welche mindestens 0,1% des Durchmessers des Ventiltellers beträgt. Die Strecke s ist in Fig. 6 angedeutet. Anders ausgedrückt verringert sich der achsiale Abstand d (vgl. Fig. 5) des äußeren Randes des Ventiltellers gegenüber einem Punkt im Zentrum des Ventiltellers somit in der Schließstellung im Vergleich zur Offenstellung um den genannten Wert.

Vorzugsweise beträgt die Strecke s, um welche sich der radial außenliegende Rand des Ventiltellers in der Schließstellung gegenüber dem zentralen Bereich des Ventiltellers verschiebt, mindestens 0,5% des Durchmessers des Ventiltellers. Beispielsweise kann die Strecke s bei einem Ventildurchmesser von 100mm ca. 1 mm betragen.

Vorzugsweise beträgt die Strecke s dieser achsialen Verschiebung des äußeren Randes des Ventiltellers weniger als 3% des Durchmessers des Ventiltellers, wobei ein Wert von weniger als 2% besonders bevorzugt ist.

Die Verformung des Ventiltellers 6 in seiner Schließstellung aufgrund der auf ihn wirkenden Schließkraft ist hierbei wie gesagt elastisch, es findet so gut wie keine bleibende plastische Verformung des Ventiltellers 6 statt. Die Verwendung eines Federstahls ist aufgrund des relativ geringen Ausmaßes dieser Verformung aber nicht erforderlich und auch nicht bevorzugt. Bevorzugt ist vielmehr die Verwendung eines Chromstahls, wie er für Ventilteller üblicherweise verwendet wird (ohne spezielle Härtungen).

Vorzugsweise verringert sich die Dicke des Ventiltellers 6 radial nach außen, wie dies aus den Fig. 3 bis 5 ersichtlich ist. der Ventilteller wird daher nach außen hin weicher, insbesondere kann sich, zumindest radial außerhalb des Verbindungsbereiches mit dem Tragteil 7, welcher im Zentrum des Ventiltellers 6 liegt, die Dicke des Ventiltellers radial nach außen kontinuierlich verringern.

Beispielsweise kann die Dicke D des Ventiltellers im der Dichtfläche 18 benachbarten Abschnitt im Bereich von 1 bis 4mm liegen, wobei ein Wert von 1,5 bis 2,5mm besonders bevorzugt ist. Die Dicke im dem Tragteil 7 benachbarten Bereich hängt von dem Durchmesser des Ventiltellers ab und kann beispielsweise bei einem Durchmesser des Ventiltellers von 100mm 3,5mm betragen.

Durch die Verringerung der Dicke des Ventiltellers nach außen hin wird eine günstige Kraftübertragung auf den Dichtring 19 erreicht.

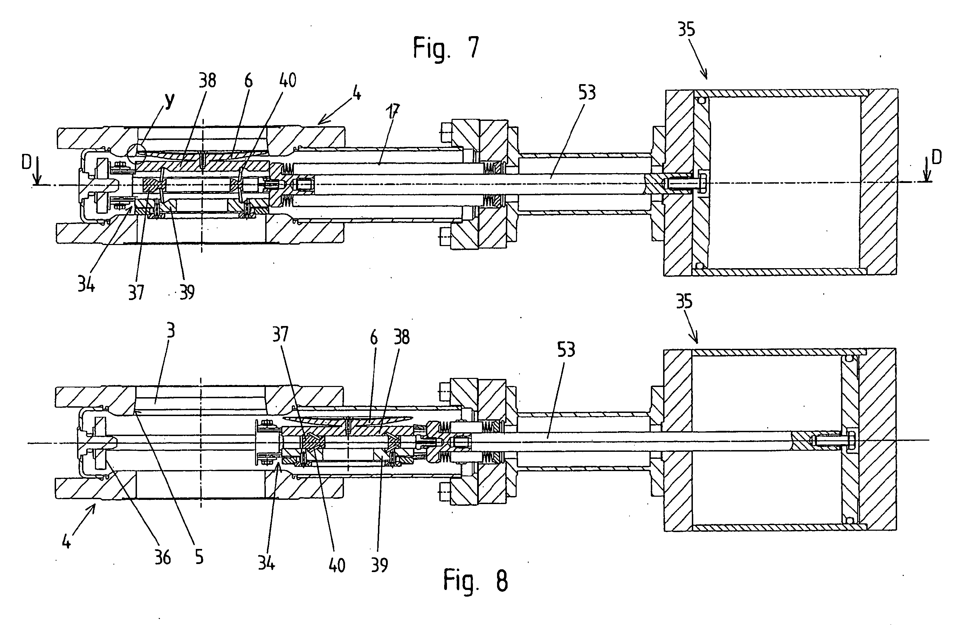

Das in den Fig. 7 bis 10 dargestellte Ausführungsbeispiel der Erfindung entspricht abgesehen von den im Folgenden beschriebenen Unterschieden dem zuvor beschriebenen Ausführungsbeispiel und für entsprechende Teile wurden die gleichen Bezugszeichen verwendet.

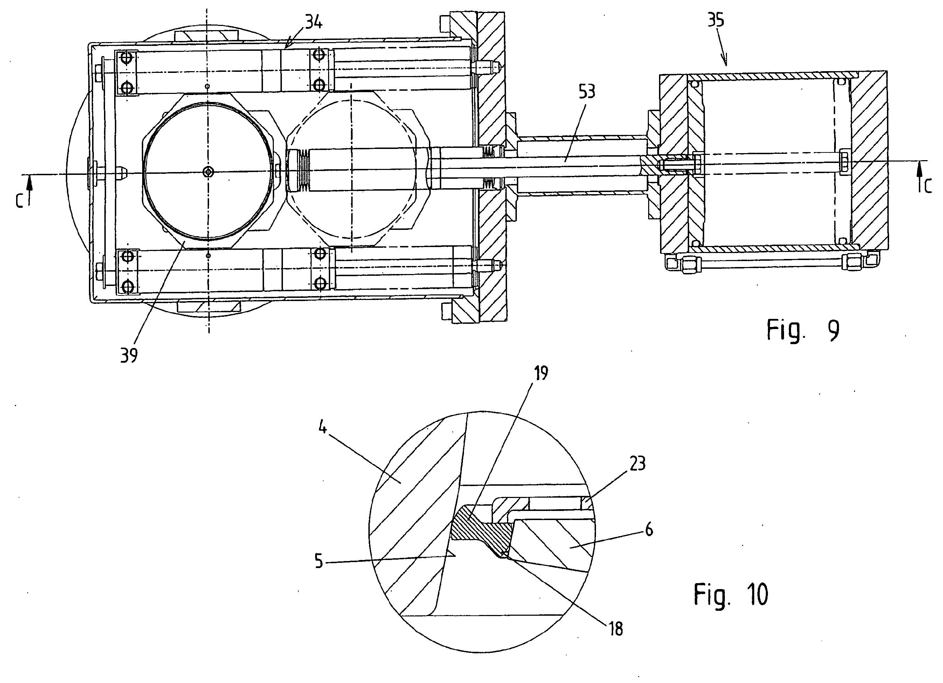

Das Vakuumventil ist bei dieser Ausführungsform als Schieberventil ausgebildet. Der Ventilteller 6 ist an einem Spreizglied 34 angebracht, welches an einer Ventilstange 7 befestigt ist. Die Ventilstange ist durch ein Betätigungsglied 35, welches beispielsweise in Form einer Kolben-Zylinder-Einheit ausgebildet ist, in achsialer Richtung verschiebbar. Der geöffnete Zustand des Vakuumventils, in welchem sich der Ventilteller 6 seitlich neben der Ventilöffnung 3 befindet (= Offenstellung des Ventiltellers 6) ist in Fig. 8 dargestellt und in Fig. 9 durch strichlierte Linien angedeutet. Zum Schließen des Ventils wird das Spreizglied 34 von der Ventilstange 53 verschoben, bis sich der Ventilteller 6 in einer die Ventilöffnung 3 überdeckenden, von der Dichtfläche 5 des Ventilkörpers 4 aber noch um mehr als die Breite des Dichtrings 19 distanzierten Stellung befindet. In dieser Stellung fährt das Spreizglied 35 an einem ventilgehäusefesten Anschlag 36 an. Die innere Platte 37, an der die Ventilstange 53 angreift, wird bei einem weiteren Verfahren der Ventilstange 53 (in die gleiche Richtung) gegenüber den äußeren Platten 38 , 39 verschoben, wobei die äußeren Platten 38, 39 gegen die Kraft eines Federelements von Kippplättchen 40 auseinandergedrückt werden. Der Ventilteller 6 wird dadurch in die Schließrichtung 15 parallel zu seiner zentralen Achse in Richtung zur Dichtfläche 5 des Ventilkörpers 4 verschoben, bis durch Anpressung der Dichtflächen 20, 21 des Dichtrings 19 an die Dichtflächen 5, 18 des Ventilkörpers 4 und Ventiltellers 6 der abgedichtete Zustand des Ventils erreicht ist (= Schließstellung des Ventiltellers 6).

Derartige Schieberventile mit Spreizgliedern 34 sind bekannt, beispielsweise aus der eingangs genannten US 4,560,141 A.

Auch andere Ausbildungen von Spreizgliedern sind bekannt, welche bei einem erfindungsgemäßen, in Form eines Schieberventils ausgebildeten Ventils eingesetzt werden könnten.

Die Platte 38, an der der Ventilteller 6 in seinem zentralen Bereich angebracht ist, stellt ein Tragteil für den Ventilteller dar. Eine einstückige Ausbildung oder eine mehrteilige Ausbildung sind wiederum denkbar und möglich.

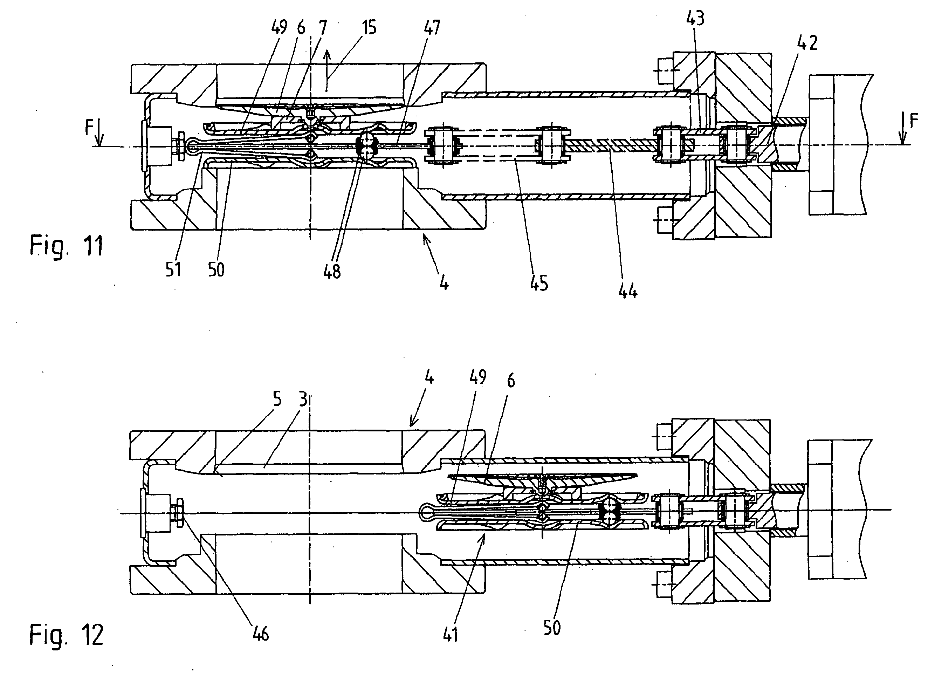

Das in den Fig. 11 bis 13 dargestellte Ausführungsbeispiel der Erfindung entspricht abgesehen von den im Folgenden beschriebenen Unterschieden dem bereits anhand der Fig. 1 bis 6 beschriebenen Ausführungsbeispiel und einander entsprechende Teile wurden mit den gleichen Bezugszeichen versehen.

Anstelle einer starren Ventilstange ist hier ein Hebelmechanismus vorhanden, der mit dem als Wagen ausgebildeten Spreizglied 41 zusammenwirkt. Am Ende einer Kolbenstange 42 einer Kolben-Zylinder-Einheit ist eine Lasche 43 verschwenkbar angebracht, die andererseits mit einem Schwenkhebel 44 verschwenkbar verbunden ist. Am Schwenkhebel 44 ist weiters eine Lasche 45 verschwenkbar angebracht, die andererseits mit dem Spreizglied 41 verschwenkbar verbunden ist. Im geschlossenen Zustand des Vakuumventils wird das Spreizglied 41 gegen einen Anschlag 46 angedrückt, wobei von einer mittleren Platte 47 mitgenommene Kugeln 48 äußere Platten 49, 50 gegen die Kraft eines Federelements 51 auseinanderspreizen. Ein derartiges Spreizglied ist bekannt.

In Fig. 13 sind zusätzlich zum geschlossenen Zustand des Ventils auch die Stellungen des Schwenkhebels 44 und der Lasche 45 im geöffneten Zustand des Ventils eingezeichnet.

Auch bei dieser Ausbildung des Vakuumventils wird der Ventilteller 6 beim Schließen des Vakuumventils vor Erreichen seiner Schließstellung in die parallel zu seiner zentralen Achse 27 liegende Schließrichtung 15 verschoben.

Das Tragteil 7 für den Ventilteller 6, mit welchem dieser in seinem zentralen Bereich verbunden ist (in einteiliger oder mehrteiliger Ausgestaltung), wird hier von einem mit der Platte 49 verbundenen Teil gebildet.

Unterschiedliche weitere Ausbildungen von Schließmechanismen eines Vakuumventils sind denkbar und möglich, wobei der Ventilteller 6 jeweils zumindest vor Erreichen seiner Schließstellung in eine Schließrichtung 15 verschoben wird, die parallel zu seiner zentralen Achse 27 liegt. Die Erfindung ist nicht auf eine spezielle Art des Schließmechanismus beschränkt.

Weitere mögliche Ausbildungsformen des Ventiltellers sind schematisch in den Fig. 14 bis 16 jeweils in achsialen Mittelschnitten dargestellt. Beim Ausführungsbeispiel gemäß Fig. 14 ist der Ventilteller 6 insgesamt gewölbt ausgebildet, d. h. seine beiden Seitenflächen sind durchgehend gewölbt. Beim Ausführungsbeispiel gemäß Fig. 15 besitzt der Ventilteller 6 zwei in radialer Richtung aneinander anschließende Abschnitte, die über eine Abwinklung 52 miteinander verbunden sind. Beim Ausführungsbeispiel gemäß Fig. 16 ist der Ventilteller 6 insgesamt V-förmig ausgebildet. Mischformen (z. B. eine gewölbte und eine abgewinkelte Seitenfläche) und unterschiedliche weitere Ausbildungen des Ventiltellers 6 (z. B. zwei radial beabstandete Abwinklungen an einer Seitenfläche oder an beiden Seitenflächen) sind denkbar und möglich.

Um auch die am Ventilkörper 4 angeordnete Dichtfläche 5 elastisch auszubilden, könnte eine ringförmige Nut eingebracht sein, die die Dichtfläche 5 umgibt (wobei beispielsweise eine Materialstärke zwischen der Dichtfläche 5 und der Nut im Bereich zwischen 0,5mm und 1 mm, an der Dichtstelle gemessen, verbleibt).

Ein erfindungsgemäßes Vakuumventil eignet sich insbesondere für Hochvakuumanwendungen.

Unterschiedliche Modifikationen der gezeigten Ausführungsbeispiele sind denkbar und möglich, ohne den Bereich der Erfindung zu verlassen. So könnte beispielsweise der Dichtring 19 auch ohne eine Einschnürung 22 ausgebildet werden. Um eine möglichst geringe Schließkraft des Ventils zu erzielen, ist eine Einschnürung aber bevorzugt.

Der Ventilkörper könnte auch von der Wand einer Vakuumkammer gebildet werden, welche die Ventilöffnung mit der diese umgebenden konischen Dichtfläche aufweist.

### Legende zu den Hinweisziffern:

- 1: Anschlussstutzen
- 2: Anschlussstutzen
- 3: Ventilöffnung
- 4: Ventilkörper
- 5: Dichtfläche
- 6: Ventilteller
- 7: Tragteil
- 8: topfartiger Abschnitt
- 9: Führungshülse
- 10: Kugellager
- 11: Spindel
- 12: Spindelmutter
- 13: Gehäusedeckel
- 14: Druckfeder
- 15: Schließrichtung
- 16: Federring
- 17: Wellenbalg bzw. Faltenbalg
- 18: Dichtfläche
- 19: Dichtring
- 20: erste Dichtfläche
- 21: zweite Dichtfläche
- 22: Einschnürung
- 23: Halteplatte
- 24: Schraubbolzen
- 25: Randsteg
- 26: Entlüftungsbohrung
- 27: zentrale Achse
- 28: Winkel
- 29: Mittellinie
- 30: Seitenfläche
- 31: Seitenfläche
- 32: Abkantung
- 33: äußerer Rand
- 34: Spreizglied
- 35: Betätigungsglied
- 36: Anschlag
- 37: Platte
- 38: Platte
- 39: Platte
- 40: Kippplättchen
- 41: Spreizglied
- 42: Kolbenstange
- 43: Lasche
- 44: Schwenkhebel
- 45: Lasche
- 46: Anschlag
- 47: Platte
- 48: Kugel
- 49: Platte
- 50: Platte
- 51: Federelement
- 52: Abwinklung
- 53: Ventilstange

## Patentansprüche

1. Vakuumventil mit einer an einem Ventilkörper (4) angeordneten konischen Dichtfläche (5), die eine Ventilöffnung (3) umgibt, einem Ventilteller (6), der rotationssymmetrisch bezüglich seiner zentralen Achse (27) ausgebildet ist und an dem eine konische Dichtfläche (18) angeordnet ist und der zwischen einer Offenstellung im geöffneten Zustand des Vakuumventils und einer Schließstellung im abgedichteten Zustand des Vakuumventils verstellbar ist, wobei die Bewegung des Ventiltellers (6) beim Schließen des Vakuumventils zumindest in einem letzten Abschnitt vor Erreichen der Schließstellung in eine Schließrichtung (15) erfolgt, die parallel zur zentralen Achse (27) des Ventiltellers (6) liegt, und einem Dichtring (19), der erste und zweite Dichtflächen (20, 21) aufweist, die in der Schließstellung des Ventiltellers (6) einerseits an die Dichtfläche (5) des Ventilkörpers (4) und andererseits an die Dichtfläche (18) des Ventiltellers (6) angepresst sind, wobei der Ventilteller (6), der Ventilkörper (4) und der Dichtring (19) zumindest in den Bereichen der Dichtflächen (5, 18, 20, 21) aus Metall bestehen, **dadurch gekennzeichnet, dass** der Ventilteller (6) im achsialen Mittelschnitt gesehen gekrümmt oder abgewinkelt ausgebildet ist, wobei er im unbelasteten Zustand zumindest in einem radial außenliegenden, an die Dichtfläche (5) angrenzenden Abschnitt einen Winkel (28) von weniger als 90° mit der Schließrichtung (15) einschließt, und dass der Ventilteller (6) eine derartige Elastizität aufweist, dass es in der Schließstellung des Ventiltellers (6) gegenüber der Offenstellung des Ventiltellers (6) durch eine elastische Verformung des Ventiltellers (6) zu einer Verschiebung des radial außenliegenden Randes (33) des Ventiltellers (6) gegenüber einem Punkt im Zentrum des Ventiltellers (6) um mindestens 0,1% des Durchmessers des Ventiltellers (6), vorzugsweise um mindestens 0,5% des Durchmessers des Ventiltellers (6), in Richtung der zentralen Achse (27) des Ventiltellers (6) kommt.

2. Vakuumventil nach Anspruch 1, **dadurch gekennzeichnet, dass** der Ventilteller (6) in einem radial außenliegenden, der Dichtfläche (18) benachbarten Bereich mit der Schließrichtung (15) einen Winkel (28) einschließt, der im unbelasteten Zustand des Ventiltellers (6) im Bereich von 65° bis 87°, vorzugsweise im Bereich von 75° bis 85° liegt.

3. Vakuumventil nach Anspruch 1 oder Anspruch 2, **dadurch gekennzeichnet, dass** eine oder beide Seitenflächen (30, 31) des Ventiltellers im achsialen Mittelschnitt gesehen durchgehend gekrümmt ausgebildet ist/sind.

4. Vakuumventil nach Anspruch 1 oder Anspruch 2, **dadurch gekennzeichnet, dass** eine oder beide Seitenflächen (30, 31) des Ventiltellers (6) V-förmig ausgebildet ist/sind.

5. Vakuumventil nach Anspruch 1 oder Anspruch 2, **dadurch gekennzeichnet, dass** eine oder beide Seitenflächen (30, 31) mindestens zwei in radialer Richtung aneinander anschließende Abschnitte aufweist, die über eine Abkrümmung oder Abwinklung (52) miteinander verbunden sind.

6. Vakuumventil nach einem der Ansprüche 1 bis 5, **dadurch gekennzeichnet, dass** die Dicke (D) des Ventiltellers (6) sich radial nach außen verringert.

7. Vakuumventil nach Anspruch 6, **dadurch gekennzeichnet, dass** sich die Dicke (D) des Ventiltellers (6) radial außerhalb des Verbindungsbereiches mit einem Tragteil (7) radial nach außen kontinuierlich verringert.

8. Vakuumventil nach einem der Ansprüche 1 bis 7, **dadurch gekennzeichnet, dass** die Dicke (D) des Ventiltellers (6) unmittelbar anschließend an die Dichtfläche (18) im Bereich von 1 mm bis 4mm, vorzugsweise im Bereich von 1,5mm bis 2,5mm liegt.

9. Vakuumventil nach einem der Ansprüche 1 bis 8, **dadurch gekennzeichnet, dass** der Dichtring (19) am Ventilteller (6) gehalten ist.

10. Vakuumventil nach Anspruch 9, **dadurch gekennzeichnet, dass** eine Halteplatte (23) an der vom den Ventilteller (6) tragenden Tragteil (7) abgewandten Vorderseite des Ventiltellers (6) befestigt ist, die einen abgewinkelten Randsteg (25) aufweist, dessen Stirnseite am Dichtring (19) anliegt.

11. Vakuumventil nach einem der Ansprüche 1 bis 10, **dadurch gekennzeichnet, dass** die Dichtflächen (20, 21) des Dichtrings (19) im Querschnitt gesehen kreisbogenförmig verlaufen.

12. Vakuumventil nach einem der Ansprüche 1 bis 11, **dadurch gekennzeichnet, dass** der Dichtring (19) im Bereich zwischen den beiden Dichtflächen (20, 21) eine Einschnürung (22) aufweist, die vorzugsweise durch eine V-förmige Ausbildung der beiden die Dichtflächen (20, 21) verbindenden Seitenflächen ausgebildet wird.

13. Vakuumventil nach einem der Ansprüche 1 bis 12, **dadurch gekennzeichnet, dass** sich der radial außenliegende Rand des Ventiltellers (6) in der Schließstellung des Ventiltellers (6) gegenüber der Offenstellung des Ventiltellers (6) um höchstens 3%, vorzugsweise höchstens 2% des Durchmessers des Ventiltellers (6) in Bezug auf den Punkt im Zentrum des Ventiltellers (6) durch eine elastische Verformung des Ventiltellers (6) in achsialer Richtung verschiebt.

14. Vakuumventil nach einem der Ansprüche 1 bis 13, **dadurch gekennzeichnet, dass** der an die Dichtfläche (18) angrenzende, radial außenliegende Abschnitt des Ventiltellers (6) in der Schließstellung des Ventiltellers (6) einen Winkel (28) von höchstens 90° mit der Schließrichtung (15) einschließt.

## Claims

1. A vacuum valve comprising a conical sealing surface (5) disposed on a valve body (4), which sealing surface surrounds a valve opening (3), a valve disc (6) which is designed so as to be rotationally symmetrical with respect to its central axis (27) and on which is disposed a conical sealing surface (18) and which is displaceable between an open position in the opened state of the vacuum valve and a closed position in the sealed state of the vacuum valve, the movement of the valve disc (6) at the closing of the vacuum valve taking place, at least in a final section before reaching the closed position, in a closing direction (15) lying parallel to the central axis (27) of the valve disc (6), and a sealing ring (19) which has first and second sealing surfaces (20, 21) which in the closed position of the valve disc (6) are pressed on the one hand against the sealing surface (5) of the valve body (4) and on the other hand against the sealing surface (18) of the valve disc (6), the valve disc (6), the valve body (4) and the sealing ring (19) being made of metal at least in the regions of the sealing surfaces (5, 18, 20, 21), **characterised in that** the valve disc (6) is designed so as to be curved or angled, viewed in the axial centre section, forming an angle (28) of less than 90° with the closing direction (15) in the unloaded state, at least in a radially external portion adjoining the sealing surface (5), and **in that** the valve disc (6) has such an elasticity that, in the closed position of the valve disc (6), relative to the open position of the valve disc (6) a displacement of the radially external edge (33) of the valve disc (6) occurs as a result of an elastic deformation of the valve disc (6) in relation to a point in the centre of the valve disc (6) by at least 0.1 % of the diameter of the valve disc (6), preferably at least 0.5 % of the diameter of the valve disc (6), in the direction of the central axis (27) of the valve disc (6).

2. A vacuum valve according to Claim 1, **characterised in that** the valve disc (6) forms in a radially external region adjacent to the sealing surface (18) an angle (28) with the closing direction (15) which in the unloaded state of the valve disc (6) lies within the range of 65° to 87°, preferably within the range of 75° to 85°.

3. A vacuum valve according to Claim 1 or Claim 2, **characterised in that** one or both side surfaces (30, 31) of the valve disc, viewed in the axial centre section, is/are designed so as to be continuously curved.

4. A vacuum valve according to Claim 1 or Claim 2, **characterised in that** one or both side surfaces (30, 31) of the valve disc (6) is/are designed so as to be V-shaped.

5. A vacuum valve according to Claim 1 or Claim 2, **characterised in that** one or both side surfaces (30, 31) has at least two portions adjoining one another in the radial direction which are connected to one another via a curve or a bend (52).

6. A vacuum valve according to one of Claims 1 to 5, **characterised in that** the thickness (D) of the valve disc (6) decreases radially outwardly.

7. A vacuum valve according to Claim 6, **characterised in that** the thickness (D) of the valve disc (6) radially outside the region of connection to a supporting part (7) decreases continuously radially outwardly.

8. A vacuum valve according to one of Claims 1 to 7, **characterised in that** the thickness (D) of the valve disc (6) immediately adjoining the sealing surface (18) lies within the range of 1 mm to 4 mm, preferably within the range of 1.5 mm to 2.5 mm.

9. A vacuum valve according to one of Claims 1 to 8, **characterised in that** the sealing ring (19) is held on the valve disc (6).

10. A vacuum valve according to Claim 9, **characterised in that** a holding plate (23) is secured to the front side of the valve disc (6) remote from the supporting part (7) supporting the valve disc (6), which holding plate has an angled peripheral bar (25), the end face of which abuts the sealing ring (19).

11. A vacuum valve according to one of Claims 1 to 10, **characterised in that** the sealing surfaces (20, 21) of the sealing ring (19) extend in a circular arc shape, viewed in cross-section.

12. A vacuum valve according to one of Claims 1 to 11, **characterised in that** the sealing ring (19) has in the region between the two sealing surfaces (20, 21) a constriction (22) which is preferably formed by a V-shaped construction of the two side surfaces connecting the sealing surfaces (20, 21).

13. A vacuum valve according to one of Claims 1 to 12, **characterised in that** the radially external edge of the valve disc (6), in the closed position of the valve disc (6), relative to the open position of the valve disc (6) displaces by at most 3%, preferably at most 2% of the diameter of the valve disc (6) with respect to the point in the centre of the valve disc (6) as a result of an elastic deformation of the valve disc (6) in the axial direction.

14. A vacuum valve according to one of Claims 1 to 13, **characterised in that** the radially external portion of the valve disc (6) adjoining the sealing surface (18) forms an angle (28) of at most 90° with the closing direction (15) in the closed position of the valve disc (6).

## Revendications

1. Soupape à vide comportant sur un corps de soupape (4) une surface d'étanchéité conique (5) qui entoure une ouverture de soupape (3), une tête de soupape (6) à symétrie de révolution par rapport à son axe central (27), qui avec une surface d'étanchéité conique (18) est réglable entre une position ouverte à l'état ouvert de la soupape à vide et une position fermée à l'état obturé de la soupape à vide, le déplacement de la tête de soupape (6) lors de la fermeture de la soupape à vide au moins dans une dernière section avant la mise en position fermée se faisant dans une direction de fermeture (15) parallèle à l'axe central (27) de la tête de soupape (6), et une bague d'étanchéité (19) qui, avec des première et seconde surfaces d'étanchéité (20, 21), est pressée en position fermée de la tête de soupape (6) d'une part contre la surface d'étanchéité (5) du corps de soupape (4) et d'autre part contre la surface d'étanchéité (18) de la tête de soupape (6), la tête de soupape (6), le corps de soupape (4) et la bague d'étanchéité (19) étant composés de métal au moins dans les zones des surfaces d'étanchéité (5, 18, 20, 21),
**caractérisée en ce que**
vue en coupe médiane axiale, la tête de soupape (6) est courbée ou pliée elle fait un angle (28) inférieur à 90° avec la direction de fermeture (15) à l'état à vide au moins dans une section radialement externe et adjacente à la surface d'étanchéité (5), et la tête de soupape (6) présente une élasticité telle que dans la position fermée de la tête de soupape (6), par rapport à la position ouverte de la tête de soupape (6), une déformation élastique de la tête de soupape (6) produit un déplacement du bord radialement externe (33) de la tête de soupape (6) par rapport à un point au centre de la tête de soupape (6) d'au moins 0,1% du diamètre de la tête de soupape (6), de préférence d'au moins 0,5% du diamètre de la tête de soupape (6), en direction de l'axe central (27) de la tête de soupape (6).

2. Soupape à vide selon la revendication 1,
**caractérisée en ce que**
dans une zone radialement externe et adjacente à la surface d'étanchéité (18) la tête de soupape (6) fait avec la direction de fermeture (15) un angle (28) qui à l'état à vide de la tête de soupape (6) est dans la plage de 65° à 87°, de préférence dans la plage de 75° à 85°.

3. Soupape à vide selon la revendication 1 ou 2,
**caractérisée en ce que**
l'une ou les deux faces latérales (30, 31) de la tête de soupape est/sont formé(es) d'un seul tenant de façon courbée lorsqu'elle(s) est/ sont vue(s) en coupe médiane axiale.

4. Soupape à vide selon la revendication 1 ou 2,
**caractérisée en ce que**
l'une ou les deux faces latérales (30, 31) de la tête de soupape (6) est/ sont en forme de V.

5. Soupape à vide selon la revendication 1 ou 2,
**caractérisée en ce que**
l'une ou les deux faces latérales (30, 31) présente(nt) au moins deux sections adjacentes l'une à l'autre dans la direction radiale et reliées entre elles par une courbure ou un pliage (52).

6. Soupape à vide selon l'une quelconque des revendications 1 à 5,
**caractérisée en ce que**
l'épaisseur (D) de la tête de soupape (6) diminue radialement vers l'extérieur.

7. Soupape à vide selon la revendication 6,
**caractérisée en ce que**
l'épaisseur (D) de la tête de soupape (6) diminue radialement et de façon continue vers l'extérieur, en dehors de la zone de liaison comportant une partie porteuse (7).

8. Soupape à vide selon l'une quelconque des revendications 1 à 7,
**caractérisée en ce que**
l'épaisseur (D) de la tête de soupape (6) directement adjacente à la surface d'étanchéité (18) est dans la plage de 1 mm à 4 mm, de préférence dans la plage de 1,5 mm à 2,5 mm.

9. Soupape à vide selon l'une quelconque des revendications 1 à 8,
**caractérisée en ce que**
la bague d'étanchéité (19) est maintenue sur la tête de soupape (6).

10. Soupape à vide selon la revendication 9,
**caractérisée en ce qu'**
une plaque de maintien (23) est fixée à la face avant de la tête de soupape (6) détournée de la partie porteuse (7) portant la tête de soupape (6), et présente une barrette marginale pliée (25), dont la face avant est placée contre la bague d'étanchéité (19).

11. Soupape à vide selon l'une quelconque des revendications 1 à 10,
**caractérisée en ce que**
les surfaces d'étanchéité (20, 21) de la bague d'étanchéité (19) s'étendent en forme d'arc de cercle lorsqu'elles sont vues en coupe transversale.

12. Soupape à vide selon l'une quelconque des revendications 1 à 11,
**caractérisée en ce que**
la bague d'étanchéité (19) présente dans la zone entre les deux surfaces d'étanchéité (20, 21) un rétrécissement (22) formé de préférence par une forme en V des deux faces latérales reliant les surfaces d'étanchéité (20, 21).

13. Soupape à vide selon l'une quelconque des revendications 1 à 12,
**caractérisée en ce que**
le bord radialement externe de la tête de soupape (6) se déplace en position fermée de la tête de soupape (6) par rapport à la position ouverte de la tête de soupape (6), d'au plus 3%, de préférence d'au plus 2% du diamètre de la tête de soupape (6) au point central de la tête de soupape (6), par une déformation élastique de la tête de soupape (6) en direction axiale.

14. Soupape à vide selon l'une quelconque des revendications 1 à 13,
**caractérisée en ce que**
dans la position fermée de la tête de soupape (6) la section de la tête de soupape (6) adjacente à la surface d'étanchéité (18) et radialement externe fait un angle (28) d'au plus 90° avec la direction de fermeture (15).
